# EUROPEAN PATENT SPECIFICATION

(11) **EP 2 833 442 B1**
(45) Date of publication and mention of the grant of the patent: **14.08.2019**
(21) Application number: 13769468.3
(22) Date of filing: 07.02.2013
(51) Int. Cl.: H01M 4/02, H01M 4/04, H01M 4/13, H01M 4/139

(54) **BATTERY ELECTRODE SUBSTRATE SHEET CONTAINING A DEFECT SIGN MARK**
AUSGANGSMATERIAL FÜR BATTERIEELEKTRODE
MATÉRIAU DE SOURCE D'ÉLECTRODE DE BATTERIE

(30) Priority: 27.03.2012 JP 2012070612
(43) Date of publication of application: 04.02.2015
(73) Proprietor: Envision AESC Energy Devices Ltd., Sagamihara-shi, Kanagawa (JP)
(72) Inventor: UKITA , Akio, Kanagawa 2525298 (JP)
(74) Representative: Vossius & Partner Patentanwälte Rechtsanwälte mbB
(86) International application number: PCT/JP2013/052894
(87) International publication number: WO 2013/145876

(56) References cited:
- WO-A1-2011/078229
- JP-A- 2007 066 821
- JP-A- 2009 043 515
- JP-A- 2009 266 739
- JP-A- 2009 266 739
- JP-A- 2010 009 818

## Description

### Technical Field

The present invention relates to a battery electrode substrate sheet used for a battery electrode.

### Background Art

A positive electrode used in a battery, for example, a lithium ion secondary battery is produced by forming, in a predetermined thickness, a coating layer of a positive electrode active material on an aluminum foil. Similarly, a negative electrode is produced by forming a coating layer of a negative electrode active material on a copper foil.

Presence of an abnormality in thickness, such as ruggedness, or coating unevenness in the coating layer of the metal foil significantly affects battery characteristics. In order to cope with this, a detection means such as an image pickup device or a non-contact film thickness instrument is used to detect a defective part in a continuous manner.

There is proposed a battery electrode manufacturing system provided with a marking means for putting a start point mark on a metal foil at a position corresponding to a start point of a coated region where a measured film thickness goes out of a prescribed range and putting an end point mark on the metal foil at a position corresponding to an end point of the coated region where the measured thickness goes out of the prescribed range. At production of an electrode, an electrode punching means is used to punch the metal foil excluding an area from the starting point mark to the end point mark (refer to, for example, Patent Document 1).

### Citation List

### Patent Documents

[Patent Document 1] JP2011-134479A
[Patent Document 2] JP2009 266739 A
[Patent Document 3] WO 2011/078229 A

### Disclosure of the Invention

### Problems to be Solved by the Invention

As described in the invention disclosed in Patent Document 1, by indicating a part of the coating layer of the electrode active material at which the thickness unevenness exists, it is possible to exclude the part including the thickness unevenness in producing the battery electrode; however, there exists the following problem. Patent Documents 2 and 3 disclose marking signs for defective occurrences on electrode substrates.

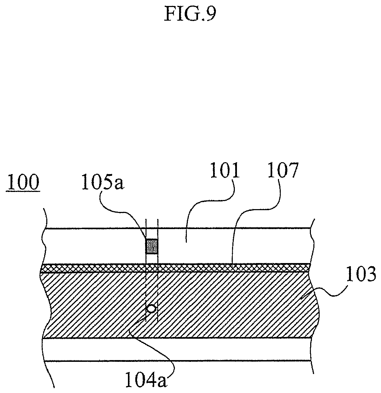

FIG. 9 is a plan view illustrating an example of a battery electrode substrate sheet in which an electrode active material coating part is formed on a conventional collector. A coating unevenness 104a exists in a coating layer 103 of a positive electrode active material formed on a positive electrode collector 101.

There is formed a defect sign part 105a with its leading end aligned with an extension line extending, in a width direction of a strip-shaped collector, from an end portion of the coating unevenness 104a on a leading end side of the collector up to a position exceeding the positive electrode active material coating layer and its rear end aligned with an extension line extending, in the width direction of the collector, from an end portion of the coating unevenness 104a on a rear end side of the collector up to a position exceeding the positive electrode active material coating layer.

Subsequently, an insulating protective film 107 is formed on the positive electrode collector 101 in a longitudinal direction of the collector along the positive electrode active material coating layer 103. It is necessary to provide a predetermined gap between the defect sign part 105a and insulating protective film 107 in order to prevent mutual interference between them, so that an increase in a width of the collector cannot be avoided.

A portion located outward of the insulating protective film 107 is an unnecessary portion as a battery electrode, excluding a portion where a positive electrode lead tab is formed, so that an amount of the collector to be discarded is increased. In addition, two processing steps of formation of the defect sign part and formation of the insulating protective film are required for detection of the thickness unevenness.

### Means for Solving the Problems

The essential technical features of the present invention are disclosed in the wording of independent claim 1 presently on file. Other embodiments of the invention are disclosed in the wordings of the dependent claims 2-10. above problems can be solved by a battery electrode substrate sheet including a strip-shaped collector, an electrode active material coating film formed on the collector in a longitudinal direction thereof, and an insulating protective film formed on an electrode active material non-coating surface of the collector so as to extend along the coating film in the longitudinal direction thereof, wherein a defect sign part that indicates a portion at which a defective part of the coating film exists is formed on the insulating protective film.

Further, in the battery electrode substrate sheet, a leading end of the defect sign part is disposed on an extension line extending, in a width direction of the collector, from a leading end of the defect part in a length direction of the collector, and a rear end of the defect sign part is disposed on an extension line extending, in the width direction of the collector, from a rear end of the defect part in the length direction of the collector.

In the battery electrode substrate sheet, the insulating protective film is continuously formed, excluding the defect sign part.

In the battery electrode substrate sheet , the insulating protective film is provided only at an electrode lead tab of a unit electrode forming part to be produced, and the defect sign part is provided in the electrode lead tab forming part belonging to a unit electrode forming part in which the defect part exists on the coating part.

In the battery electrode substrate sheet, both sides of a width direction center line of the coating film coated on the collector are independent of each other, each of the both sides includes the defect sign part corresponding to the defect part existing in itself, and when the defect part exists on the center line, the defect sign part is formed on the both sides of the center line.

In the battery electrode substrate sheet, on at least one of front and back side surfaces of the collector, the defect sign part corresponding to the defect part on the opposite side is also formed at a position symmetrical to the defect part on the opposite side with respect to a center surface of the collector in a thickness direction thereof.

In the battery electrode substrate sheet, the defect sign part is formed as a portion at which the insulating protective film is not coated or formed.

In the battery electrode substrate sheet, the insulating protective film is an ultraviolet curing composition formed by an inkjet coating means.

In the battery electrode substrate sheet, a plurality of rows of the electrode active material coating films are formed on the collector so as to extend in the longitudinal direction thereof with a predetermined interval provided therebetween.

The battery electrode substrate sheet is used for a lithium ion battery electrode.

The battery electrode substrate sheet is used for a positive electrode.

### Advantages of the Invention

According to the battery electrode substrate sheet of the present invention, the defective part existing in the coating film obtained by coating the electrode active material on the collector is indicated using a formation part of the insulating protective film formed on the electrode active material non-coating surface of the collector. Thus, it is possible to reduce a size of a part of the collector that is not used as a battery electrode and to easily identify the defect sign part using a defect identification device or by a visual observation.

### Brief Description of the Drawings

FIGS. 1A and 1B are views each illustrating an embodiment of a battery electrode substrate sheet according to the present invention.
FIGS. 2A and 2B are plan views each illustrating another embodiment of the battery electrode substrate sheet according to the present invention.
FIGS. 3A and 3B are plan views each illustrating still another embodiment of the battery electrode substrate sheet according to the present invention.
FIG. 4 is a view illustrating a manufacturing process of the battery electrode substrate sheet according to the present invention.
FIG. 5 is a view illustrating an example of another manufacturing process of the battery electrode substrate sheet according to the present invention.
FIGS. 6A to 6C are views each illustrating still another embodiment of the battery electrode substrate sheet according to the present invention.
FIG. 7 is a view illustrating still another embodiment of the battery electrode substrate sheet according to the present invention.
FIGS. 8A to 8D are views each illustrating a lithium ion battery using the electrode produced from the battery electrode substrate sheet according to the present invention.
FIG. 9 is a plan view illustrating an example of a battery electrode substrate sheet in which an electrode active material coating part is formed on a conventional collector.

### Best Mode for Carrying Out the Invention

Hereinafter, a battery electrode substrate sheet according to the present invention will be described with reference to the drawings.

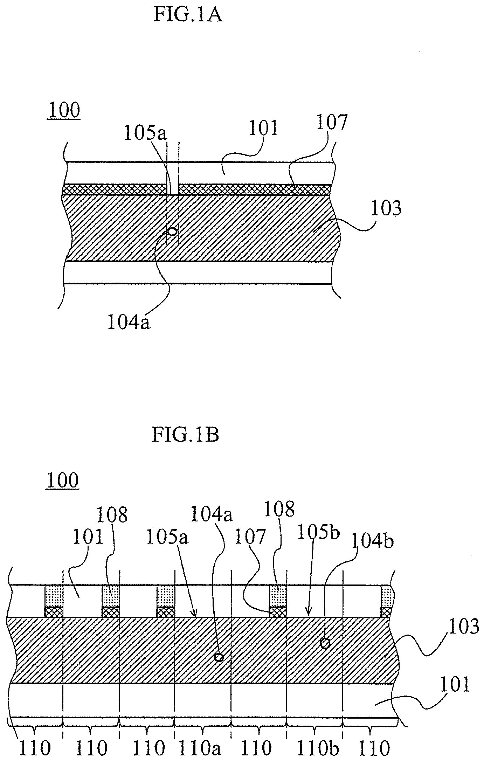

FIGS. 1A and 1B are plan views each illustrating an embodiment of a battery electrode substrate sheet according to the present invention.

In a battery electrode substrate sheet 100 illustrated in FIG. 1A, a coating unevenness 104a exists in a coating layer 103 of a positive electrode active material formed on a positive electrode collector 101.

There is formed a defect sign part 105a with its leading end aligned with an extension line extending, in a width direction of a strip-shaped collector, from a leading end portion of the coating unevenness 104a in a longitudinal direction of the collector up to a position exceeding the positive electrode active material coating layer and its rear end portion aligned with an extension line extending, in the width direction of the collector, from an end portion of the coating unevenness 104a in the longitudinal direction of the collector up to a position exceeding the positive electrode active material coating layer.

The defect sign part 105a illustrated in FIG. 1A is provided by forming a portion where an insulating protective film 107 is absent in a region where the insulating protective film 107 continuously exists along an outer edge portion of the positive electrode active material coating layer 103.

With this configuration, the defect sign part 105a can be identified by presence/absence of the insulating protective film 107, whereby there can be provided a battery electrode substrate sheet that does not require an additional member for forming the defect sign part 105a.

FIG. 1B is a view explaining an example in which a battery electrode is cut out from the battery electrode substrate sheet 100 at predetermined intervals for each unit electrode 110 having a certain size.

Coating unevennesses 104a and 104b exist in the positive electrode active material coating layer 103 formed on the positive electrode collector 101.

In FIG. 1B, the insulating protective film 107 is formed on an electrode active material non-coating surface of the collector at a portion between the outer edge portion of the positive electrode active material coating layer 103 and an electrode lead tab 108.

Unit electrodes 110a and 110b, each in which a leading end portion or a rear end portion of a coating unevenness 104a or 104b in the longitudinal direction of the collector exists, include defect sign parts 105a and 105b, respectively, which are provided by not forming the insulating protective film.

In the example of FIG. 1B, the battery electrode is cut out from the battery electrode substrate sheet 100 at predetermined intervals for each unit electrode 110 having a certain size, so that a defective part, if exists, can be reliably discarded by a simple operation although a size of the part to be discarded is large.

Further, in the battery electrode substrate sheet of the example, the insulating protective film is formed only in a length corresponding to a lateral width of the electrode lead tab, which saves a use amount of a raw material of the insulating protective film.

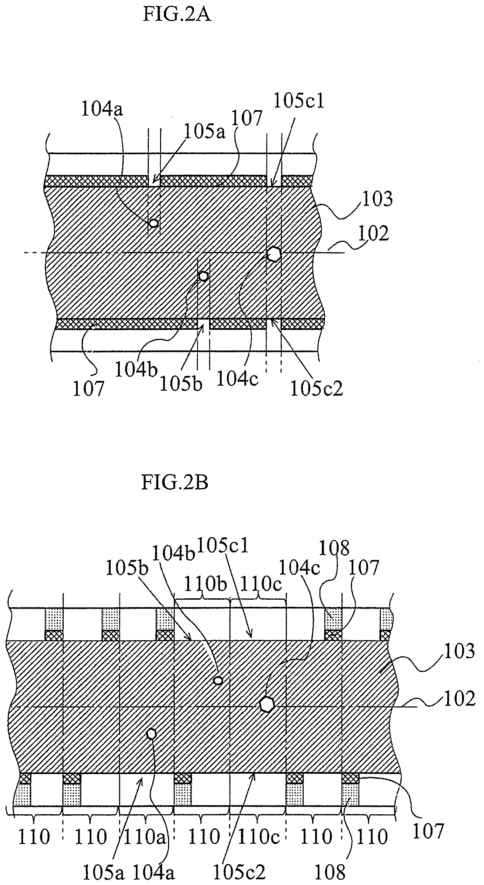

FIGS. 2A and 2B are plan views each illustrating another embodiment of the battery electrode substrate sheet according to the present invention.

In the battery electrode substrate sheet 100 illustrated in FIG. 2A, the positive electrode active material coating layer 103 is formed on the positive electrode collector 101 in the longitudinal direction thereof.

In addition to the coating unevennesses 104a and 104b, a coating unevenness 104c exists on a longitudinally-extending center line 102 of the coating layer. Thus, there are formed defect sign parts 105a and 105b with their leading end portions aligned with extension lines extending, in the width direction of the collector, from leading end portions of the respective coating unevennesses 104a and 104b in the longitudinal direction of the collector up to positions exceeding the positive electrode active material coating layer and their rear end portions aligned with extension lines extending, in the width direction of the collector, from rear end portions of the respective coating unevennesses 104a and 104b in the longitudinal direction of the collector up to positions exceeding the positive electrode active material coating layer. In addition, defect sign parts 105c1 and 105c2 are each provided by forming a portion where the insulating protective film 107 is absent. The defect sign parts 105c1 and 105c2 are each positioned on the insulating protective film 107 continuously formed along the outer edge portion on each of both sides of the positive electrode active material coating layer 103 at a portion corresponding to an extension of the coating unevenness 104c on the center line 102 in the width direction.

FIG. 2B is a view explaining an example of the battery electrode substrate sheet used when the battery electrode is cut out from the battery electrode substrate sheet 100 at predetermined intervals for each unit electrode 110 having a certain size.

The insulating protective film 107 is formed between the outer edge portion of the positive electrode active material coating layer 103 and electrode lead tab forming part 108.

In addition to the coating unevennesses 104a and 104b, a coating unevenness 104c exists in the positive electrode active material coating layer 103 formed on the positive electrode collector 101. The unit electrode 110a in which the leading end portion or rear end portion of the coating unevenness 104a in the longitudinal direction of the collector exists includes a defect sign part 105a, which is provided by not forming the insulating protective film.

Further, a part of the coating unevenness 104c exists on the longitudinally-extending center line 102. Thus, defect sign parts 105c1 and 105c2, which are provided by not forming the insulating protective film, are provided at the outer edge of the positive electrode active material coating layer 103.

With the above configuration, it is possible to eliminate all the electrode units that have the coating unevenness at manufacturing time of the battery electrode, irrespective of the position of the coating unevenness.

In the above description, the defect sign part for indicating the coating unevenness existing on one surface of the battery electrode substrate sheet has been described. However, in the battery electrode substrate sheet, the positive electrode active material coating layer 103 is formed on both front and back side surfaces of the collector. A problem occurs in characteristics of the battery electrode even when the coating unevenness exists only on one surface, so that it is important to check a state of both side surfaces of the battery electrode substrate sheet.

Thus, it is preferable to form, at least on one of the front and back side surfaces, both the defect sign part for one side surface and that for the other side surface. That is, it is preferable to form, at least on one of the front and back side surfaces, the defect sign parts corresponding to all the coating unevennesses on both front and back side surfaces.

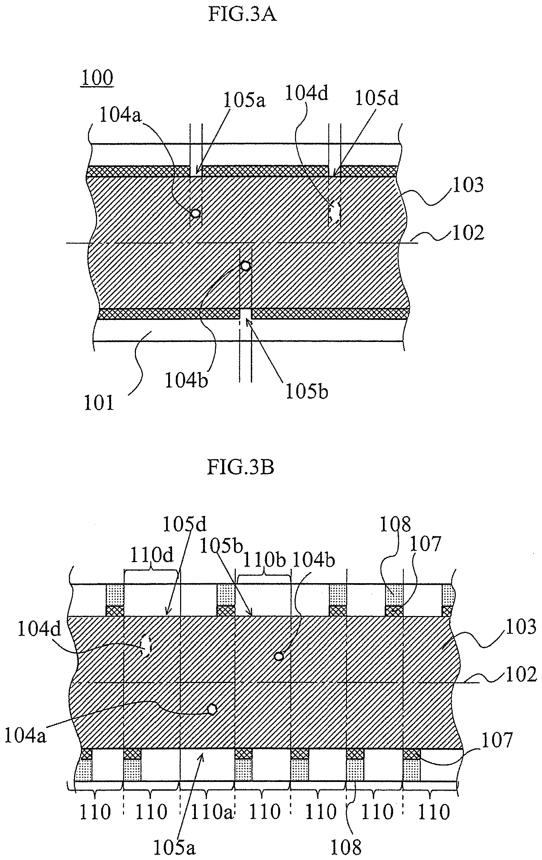

FIGS. 3A and 3B are plan views each illustrating still another embodiment of the battery electrode substrate sheet according to the present invention.

The positive electrode collector 101 of the battery electrode substrate sheet 100 illustrated in FIG. 3A has the positive electrode active material coating layer 103 formed in the longitudinal direction thereof and has a symmetrical shape with respect to the longitudinally-extending center line 102 of the coating layer 103.

There are formed defect sign parts 105a and 105b with the end portions of each of the defect sign parts 105a and 105b aligned with extension lines extending, in the width direction of the collector, from end portions of the respective coating unevennesses 104a and 104b in the longitudinal direction of the collector up to positions exceeding the positive electrode active material coating layer. In addition, a projected part 104d is obtained by projecting a coating unevenness existing on the back side surface to the positive electrode active material coating layer, and there is formed a defect sign part 105d with the end portions thereof aligned with extension lines extending, in a width direction of the collector, from the end portions of the projected part 104d in a longitudinal direction of the collector up to a position exceeding the positive electrode active material coating layer.

FIG. 3B illustrates an example in which the unit battery electrode 110 is cut out from the battery electrode substrate sheet at predetermined intervals.

Unit electrodes 110a and 110b, in which coating unevenness 104a and 104b exist, respectively, include defect sign parts 105a and 105b, respectively, which are provided by not forming the insulating protective film. In addition, a unit electrode 110d, in which a projected part 104d obtained by projecting a coating unevenness existing on the back side surface to the positive electrode active material coating layer, includes a defect sign part 105d which is formed by not forming the insulating protective film.

As described above, the defect sign parts corresponding to all the coating unevennesses on both front and rear side surfaces are formed at least on one of the front and back side surfaces, so that it is possible to produce a battery electrode having no defective part by checking only one surface at cutting out of the electrode from the battery electrode substrate sheet.

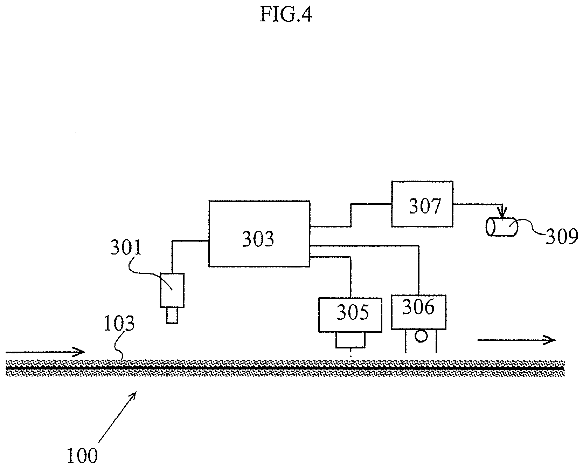

FIG. 4 is a view illustrating a manufacturing process of the battery electrode substrate sheet according to the present invention.

A coating film is obtained by coating, in a predetermined thickness, the electrode active material on both surfaces of the collector made of a strip-shaped metal foil, followed by drying, and then, a roll is used to press the obtained coating film to obtain the battery electrode substrate sheet 100. Then, while moving the obtained battery electrode substrate sheet 100 at a constant speed, various defects in the active material layer 103, such as an abnormality in thickness (ruggedness), coating unevenness, discoloration are continuously detected by means of a detection means 301 such as an image pickup device or a non-contact film thickness instrument.

A detection signal including leading end position information and rear end position information of the defective part detected by the detection means 301 is transmitted to a controller 303.

Based on the detection signal, the controller 303 transmits, to an insulating protective film forming device 305 provided with a coating device, a predetermined operation signal after elapse of a time calculated from a moving speed of the battery electrode substrate sheet to make the insulating protective film forming device 305 form a coating film on an area excluding a portion where the defective part is detected. After that, an ultraviolet curing device 306 is used to irradiate the coating film with ultraviolet ray to form the insulating protective film 107.

Further, the controller 303 stores unique information including identification information of the battery electrode substrate sheet and distance information thereof from a reference point to the leading and rear ends of the defective part in an information recording device 307, as well as, in an information recording medium 309.

Various coating devices can be used as the insulating protective film forming device 305. When a non-contact coating device such as an inkjet coating device is used, accurate coating can be easily performed.

After formation of the insulating protective film, the manufacturing step of the battery electrode substrate sheet 100 is shifted to a cutting step of cutting the battery electrode or a shipping step. At this time, the unique information including defect position information of the battery electrode substrate sheet is transmitted, via a communication line or information recording medium 309, to the battery electrode cutting step, whereby the battery electrode having no defective part can be accurately cut.

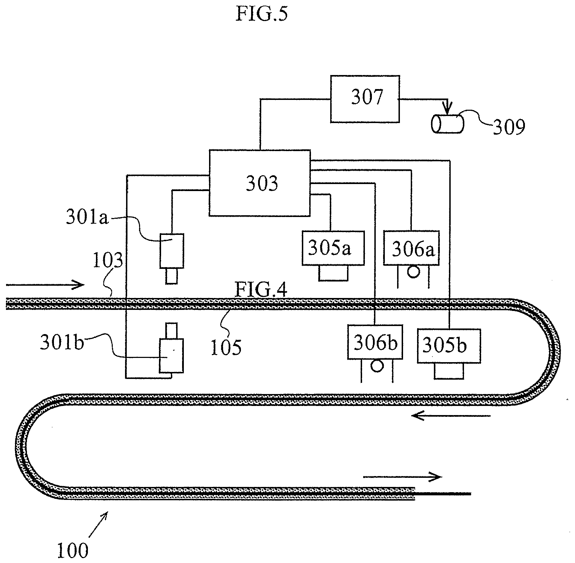

FIG. 5 is a view illustrating an example of another manufacturing process of the battery electrode substrate sheet according to the present invention.

A coating film is obtained by coating the electrode active material on both surfaces of the collector, followed by drying, and then, a roll is used to press the obtained coating film to obtain the battery electrode substrate sheet 100. Then, while moving the obtained battery electrode substrate sheet 100 at a constant speed, various defects in the active material layer 103, such as an abnormality in thickness (ruggedness), coating unevenness, discoloration on a first surface are continuously detected by means of a first detection means 301a such as an image pickup device or a non-contact film thickness instrument. At the same time, the above detection is performed also for an active material layer 105 on a second surface which is the opposite surface of the battery electrode by using a second detection means 301b.

A detection signal including leading end position information and rear end position information of the defective part detected by the first or second detection means 301a or 301b is transmitted to the controller 303.

Based on the detection signal from the first detection means 301a, the controller 303 transmits, to a first insulating protective film forming device 305a provided with a non-contact coating device such as an ink-jet coating device, a predetermined operation signal after elapse of a time calculated from the moving speed of the battery electrode substrate sheet to make the first insulating protective film forming device 305a form a coating film on an area excluding a portion where the defective part is detected. After that, an ultraviolet curing device 306a is used to irradiate the coating film with ultraviolet ray to form the insulating protective film 107.

Further, the controller 303 reverses a travel direction of the battery electrode substrate sheet that has passed through the first insulating protective film forming device 305a using a reversing pulley. Then, based on the detection signal from the second detection means 301b, the controller 303 transmits, to a second insulating protective film forming device 305b provided with a non-contact coating device such as an ink-jet coating device, a predetermined operation signal after elapse of a time calculated from the moving speed of the battery electrode substrate sheet to make the second insulating protective film forming device 305b apply an insulating protective film forming material on the second surface which is the opposite surface to the surface where the insulating protective film has already been formed. After that, an ultraviolet curing device 306b is used to irradiate the coating film with ultraviolet ray to form the insulating protective film 107.

In the above description, the defect sign part is formed on one surface of the battery electrode substrate sheet. However, a configuration may be possible in which the defect sign part is formed on one surface, as well as, on the opposite surface which is a surface symmetrical to the one surface with respect to a center surface in the thickness direction of the collector.

That is, when the first detection means 301a detects a defective part, the controller 303 transmits also to the second insulating protective film forming device 305b, a signal indicating presence of the defective part together with the defect position information, thus preventing the insulating protective film from being formed.

Similarly, when the second detection means 301b detects a defective part, the controller 303 transmits also to the first insulating protective film forming device 305a, a signal indicating presence of the defective part, thus preventing the insulating protective film from being formed.

As described above, by reflecting a detection result of one surface and a detection result of the other surface on each other, it is possible to form, for one defective part such as the coating unevenness existing on one surface, the defect sign part in which the insulating protective film is absent also on the opposite surface which is a surface symmetrical to the one surface with respect to a center surface in the thickness direction of the collector.

After formation of the insulating protective film, the manufacturing step of the battery electrode substrate sheet 100 is shifted to a cutting step of cutting the battery electrode or a shipping step. At this time, the unique information including the defect position information of the battery electrode substrate sheet is transmitted, via a communication line or information recording medium 309, to the battery electrode cutting step, whereby the battery electrode having no defective part can be accurately cut.

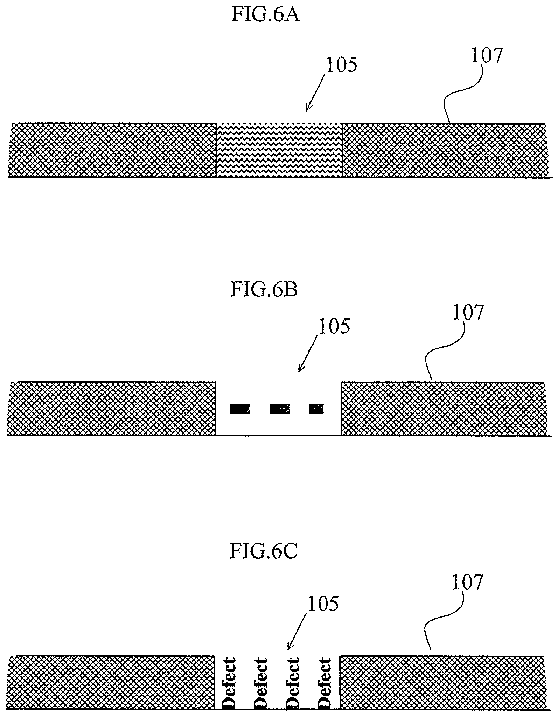

FIGS. 6A to 6C are views each illustrating still another embodiment of the battery electrode substrate sheet according to the present invention. In FIGS. 6A and 6B, marks are printed in the defect sign part 105 using the insulating protective film forming material, and in FIG. 6C, characters are printed in the same manner.

By thus printing the marks or characters, the defect sign part can be reliably visually recognized even if an abnormality occurs in the insulating protective film forming device to generate a portion where the insulating protective film is not formed.

In the above description, the coating film is formed in one row on the collector in the longitudinal direction thereof. Alternatively, however, a plurality of rows of coating films may be formed on the collector in the longitudinal direction thereof so as to extend in parallel to one another.

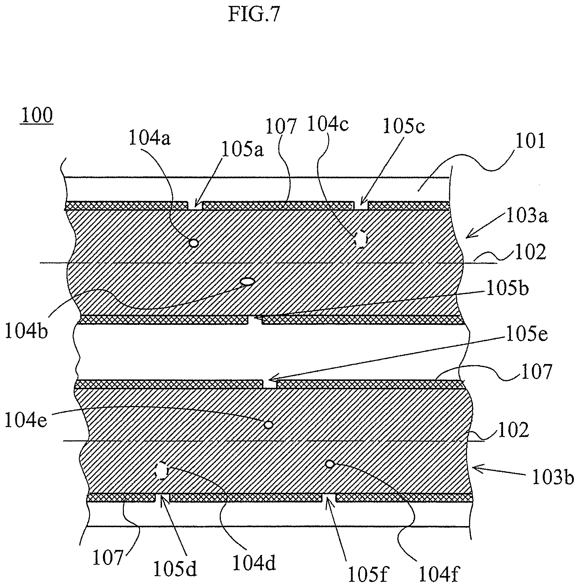

FIG. 7 is a view illustrating still another embodiment of the battery electrode substrate sheet according to the present invention.

Two rows of positive electrode active material coating layers 103a and 103b are formed on the collector 101 of the battery electrode substrate sheet 100. Defect sign parts 105a, 105b, and 105c corresponding respectively to coating unevennesses 104a, 104b and a projected part 104c of the coating unevenness on the back side surface are formed on the insulating protective film 107 which is formed on the electrode active material non-coating surface of the collector so as to extend along both sides of the coating layer 103a in the longitudinal direction thereof.

Further, defect sign parts 105d, 105e, and 105f corresponding respectively to a projected part 104d of the coating unevenness on the back side surface and coating unevennesses 104e, 104f are formed on the insulating protective film 107 which is formed on the electrode active material non-coating surface of the collector so as to extend along both sides of the coating layer 103b in the longitudinal direction thereof.

By thus forming the two rows or more rows of the coating films, production efficiency of the electrode can be improved.

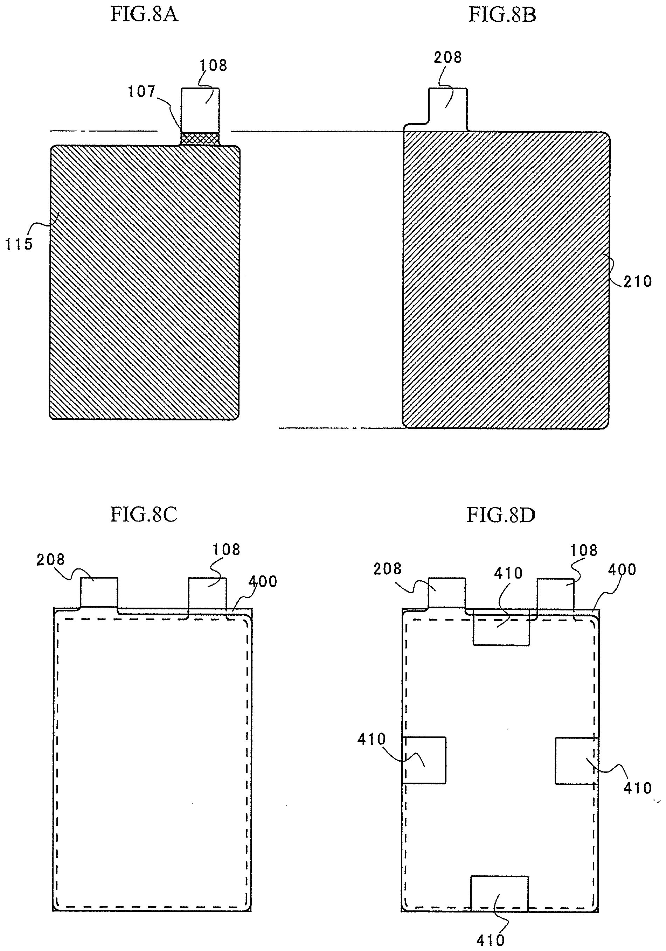

FIGS. 8A to 8D are views each illustrating a lithium ion battery using the electrode produced from the battery electrode substrate sheet according to the present invention.

As illustrated in FIG. 8A, in a unit positive electrode 115, the insulating protective film 107 is formed at an outer edge of the positive electrode active material layer from which the positive electrode lead tab 108 extends.

As illustrated in FIG. 8B, a unit negative electrode 210 is larger in area than the positive electrode.

As illustrated in FIG. 8C, the unit positive electrode 115 is housed in a bag-shaped separator 400 having the same shape as the unit negative electrode 210. Then, as illustrated in FIG. 8D, the unit positive electrode housed in the separator 400 and unit negative electrode 210 are put one over the other, followed by fixing using a fixing tape, to obtain a laminate body of a battery element.

The outer edge of the positive electrode active material layer of the positive electrode lead tab 108 of the unit positive electrode 115 is coated with the insulating protective film 107, so that even if the separator contracts, it is possible to prevent the positive electrode lead tab 108 of the unit positive electrode 205 from being short-circuited with the negative electrode 210 which is larger in area than the positive electrode 115.

### Industrial Applicability

In the battery electrode substrate sheet according to the present invention, the defective part existing in the coating film obtained by coating the electrode active material on the collector is indicated using a formation part of the insulating protective film formed on the electrode active material non-coating surface of the collector. Thus, battery electrodes each having no defective part can be cut out effectively and, thus, a battery electrode excellent in characteristics can be provided.

### Reference Signs List

- 100:: Battery electrode substrate sheet
- 101:: Positive electrode collector
- 102:: Longitudinally extending center line
- 103:: Coating layer of positive electrode active material
- 104a, 104b, 104c:: Coating unevenness
- 104d:: Projected part
- 105a, 105b, 105c1, 105c2, 105d:: Defect sign part
- 107:: Insulating protective film
- 108:: Positive electrode lead tab forming part
- 110, 110a, 110b:: Unit electrode
- 115:: Unit positive electrode
- 210:: Unit negative electrode
- 301:: Detection means
- 301a:: First detection means
- 301b:: Second detection means
- 303:: Controller
- 305:: Insulating protective film forming device
- 305a:: First insulating protective film forming device
- 305b:: Second insulating protective film forming device
- 306, 306a, 306b:: Ultraviolet curing device
- 307:: Information recording device
- 309:: information storage medium
- 400:: Bag-shaped separator
- 410:: Fixing tape

## Claims

1. A battery electrode substrate sheet **characterized by** comprising:
a strip-shaped collector (101);
an electrode active material coating film (103) formed on the collector in a longitudinal direction thereof; and
an insulating protective film (107) formed on an electrode active material non-coating surface of the collector so as to extend along the coating film in the longitudinal direction thereof, wherein
a defect sign part (105) that indicates a portion at which a defective part (104a) of the coating film exists is formed on the insulating protective film (107) and the defect sign part (105) is formed as a portion at which the insulating protective film (107) is not coated or formed.

2. The battery electrode substrate sheet according to claim 1, **characterized in that**
a leading end of the defect sign part (105) is disposed on an extension line extending, in a width direction of the collector (101), from a leading end of the defect part in a length direction of the collector, and a rear end of the defect sign part (105) is disposed on an extension line extending, in the width direction of the collector, from a rear end of the defect part in the length direction of the collector.

3. The battery electrode substrate sheet according to claim 1 or 2, **characterized in that**
the insulating protective film (107) is continuously formed, excluding the defect sign part (105).

4. The battery electrode substrate sheet according to claim 1, **characterized in that**
the insulating protective film (107) is provided only at an electrode lead tab of a unit electrode forming part to be produced, and
the defect sign part (105) is provided in the electrode lead tab forming part belonging to a unit electrode forming part in which the defect part exists on the coating part.

5. The battery electrode substrate sheet according to any one of claims 1 to 4, **characterized in that**
both sides of a width direction center line of the coating film coated on the collector (101) are independent of each other,
each of the both sides includes the defect sign part (105) corresponding to the defect part existing in itself, and
when the defect part exists on the center line, the defect sign part is formed on the both sides of the center line.

6. The battery electrode substrate sheet according to any one of claims 1 to 5, **characterized in that**
on at least one of front and back side surfaces of the collector (101), the defect sign part corresponding to the defect part on the opposite side is also formed at a position symmetrical to the defect part on the opposite side with respect to a center surface of the collector in a thickness direction thereof.

7. The battery electrode substrate sheet according to any one of claims 1 to 6, **characterized in that**
the insulating protective film (107) is an ultraviolet curing composition formed by inkjet coating means.

8. The battery electrode substrate sheet according to any one of claims 1 to 7, **characterized in that**
a plurality of rows of the electrode active material coating films are formed on the collector so as to extend in the longitudinal direction thereof with a predetermined interval provided therebetween.

9. The battery electrode substrate sheet according to any one of claims 1 to 8, **characterized in that**
the battery electrode substrate sheet (100) is used for a lithium ion battery electrode.

10. The battery electrode substrate sheet according to any one of claims 1 to 9, **characterized in that**
the battery electrode substrate sheet (100) is used for a positive electrode.

## Patentansprüche

1. Substratlagenmaterial für eine Batterieelektrode, **dadurch gekennzeichnet, dass** das Substratlagenmaterial aufweist:
einen streifenförmigen Kollektor (101);
eine auf dem Kollektor in einer Längsrichtung davon ausgebildete Beschichtung (103) aus einem aktiven Elektrodenmaterial; und
eine isolierende Schutzschicht (107), die auf einer Oberfläche des Kollektors, die nicht mit der Beschichtung aus einem aktiven Elektrodenmaterialschicht beschichtet ist, derart ausgebildet ist, dass sie sich entlang der Beschichtung in ihrer Längsrichtung erstreckt, wobei
auf der isolierenden Schutzschicht (107) ein Defektzeichenteil (105) ausgebildet ist, der einen Abschnitt anzeigt, an dem ein defekter Teil (104a) der Beschichtung vorhanden ist, und wobei der Defektzeichenteil (105) als ein Abschnitt ausgebildet ist, an dem die isolierende Schutzschicht (107) nicht beschichtet oder ausgebildet ist.

2. Substratlagenmaterial nach Anspruch 1, **dadurch gekennzeichnet, dass**
ein vorderes Ende des Defektzeichenteils (105) auf einer Verlängerungslinie angeordnet ist, die sich in einer Breitenrichtung des Kollektors (101) von einem vorderen Ende des defekten Teils in der Längsrichtung des Kollektors erstreckt, und wobei ein hinteres Ende des Defektzeichenteils (105) auf einer Verlängerungslinie angeordnet ist, die sich in der Breitenrichtung des Kollektors von einem hinteren Ende des defekten Teils in der Längsrichtung des Kollektors erstreckt.

3. Substratlagenmaterial nach Anspruch 1 oder 2, **dadurch gekennzeichnet, dass**
die isolierende Schutzschicht (107) mit Ausnahme des Defektzeichenteils (105) kontinuierlich ausgebildet ist.

4. Substratlagenmaterial nach Anspruch 1, **dadurch gekennzeichnet, dass**
die isolierende Schutzschicht (107) nur an einem Elektrodenleitungsstreifen eines herzustellenden Einheitselektrodenausbildungsteils vorgesehen ist; und
der Defektzeichenteil (105) in dem Elektrodenleitungsstreifenausbildungsteil vorgesehen ist, der zu einem Einheitselektrodenausbildungsteil gehört, in dem der defekte Teil auf der Beschichtung vorhanden ist.

5. Substratlagenmaterial nach einem der Ansprüche 1 bis 4, **dadurch gekennzeichnet, dass**
beide Seiten einer Mittellinie in Breitenrichtung der auf dem Kollektor (101) aufgetragenen Beschichtung unabhängig voneinander sind,
jede der beiden Seiten den Defektzeichenteil (105) aufweist, der dem vorhandenen defekten Teil entspricht, und
wenn der defekte Teil sich auf der Mittellinie befindet, der Defektzeichenteil auf beiden Seiten der Mittellinie ausgebildet ist.

6. Substratlagenmaterial nach einem der Ansprüche 1 bis 5, **dadurch gekennzeichnet, dass**
an einer Vorder- und/oder an einer Rückfläche des Kollektors (101) der dem defekten Teil auf der gegenüberliegenden Seite entsprechende Defektzeichenteil auch an einer Position ausgebildet ist, die sich bezüglich einer Mittenfläche des Kollektors in einer Dickenrichtung davon symmetrisch zum defekten Teil auf der gegenüberliegenden Seite befindet.

7. Substratlagenmaterial nach einem der Ansprüche 1 bis 6, **dadurch gekennzeichnet, dass**
die isolierende Schutzschicht (107) eine unter UV-Licht aushärtende Zusammensetzung ist, die durch eine Tintenstrahlbeschichtungseinrichtung gebildet wird.

8. Substratlagenmaterial nach einem der Ansprüche 1 bis 7, **dadurch gekennzeichnet, dass**
mehrere Reihen von Beschichtungen aus einem aktiven Elektrodenmaterial auf dem Kollektor derart ausgebildet, dass sie sich mit einem vorgegebenen Abstand dazwischen in seiner Längsrichtung erstrecken.

9. Substratlagenmaterial nach einem der Ansprüche 1 bis 8, **dadurch gekennzeichnet, dass**
das Substratlagenmaterial (100) für eine Batterieelektrode für eine Lithiumionenbatterieelektrode verwendet wird.

10. Substratlagenmaterial nach einem der Ansprüche 1 bis 9, **dadurch gekennzeichnet, dass**
das Substratlagenmaterial (100) für eine Batterieelektrode für eine positive Elektrode verwendet wird.

## Revendications

1. Feuille de substrat d'électrode de batterie **caractérisée en ce qu'**elle comprend :
un collecteur en forme de bande (101) ;
un film de revêtement de matériau actif d'électrode (103) formé sur le collecteur dans un sens longitudinal de celui-ci ; et
un film protecteur isolant (107) formé sur une surface de non-revêtement de matériau actif d'électrode du collecteur de manière à s'étendre le long du film de revêtement dans le sens longitudinal de celui-ci, dans laquelle
une partie d'indication de défaut (105) qui indique une portion au niveau de laquelle il existe une partie défectueuse (104a) du film de revêtement est formée sur le film protecteur isolant (107) et la partie d'indication de défaut (105) est formée en tant qu'une portion au niveau de laquelle le film protecteur isolant (107) n'est pas appliqué ou formé.

2. Feuille de substrat d'électrode de batterie selon la revendication 1, **caractérisée en ce que**
une extrémité avant de la partie d'indication de défaut (105) est disposée sur une ligne d'extension s'étendant, dans un sens de largeur du collecteur (101), depuis une extrémité avant de la partie de défaut dans un sens de longueur du collecteur, et une extrémité arrière de la partie d'indication de défaut (105) est disposée sur une ligne d'extension s'étendant, dans le sens de largeur du collecteur, depuis une extrémité arrière de la partie de défaut dans le sens de longueur du collecteur.

3. Feuille de substrat d'électrode de batterie selon la revendication 1 ou 2, **caractérisée en ce que**
le film protecteur isolant (107) est formé de manière continue, à l'exclusion de la partie d'indication de défaut (105).

4. Feuille de substrat d'électrode de batterie selon la revendication 1, **caractérisée en ce que**
le film protecteur isolant (107) est prévu uniquement au niveau d'une patte conductrice d'électrode d'une partie de formation d'électrode unitaire à produire, et
la partie d'indication de défaut (105) est prévue dans la partie de formation de patte conductrice d'électrode appartenant à une partie de formation d'électrode unitaire dans laquelle la partie de défaut existe sur la partie de revêtement.

5. Feuille de substrat d'électrode de batterie selon l'une quelconque des revendications 1 à 4, **caractérisée en ce que**
les deux côtés d'une ligne centrale dans le sens de largeur du film de revêtement appliqué sur le collecteur (101) sont indépendants l'un de l'autre,
chacun des deux côtés inclut la partie d'indication de défaut (105) correspondant à la partie de défaut existant dans celui-ci, et
lorsque la partie de défaut existe sur la ligne centrale, la partie d'indication de défaut est formée sur les deux côtés de la ligne centrale.

6. Feuille de substrat d'électrode de batterie selon l'une quelconque des revendications 1 à 5, **caractérisée en ce que**
sur au moins l'une de surfaces de côté avant et arrière du collecteur (101), la partie d'indication de défaut correspondant à la partie de défaut sur le côté opposé est également formée au niveau d'une position symétrique à la partie de défaut sur le côté opposé par rapport à une surface centrale du collecteur dans un sens d'épaisseur de celui-ci.

7. Feuille de substrat d'électrode de batterie selon l'une quelconque des revendications 1 à 6, **caractérisée en ce que**
le film protecteur isolant (107) est une composition à durcissement par ultraviolets formée par des moyens de revêtement à jet d'encre.

8. Feuille de substrat d'électrode de batterie selon l'une quelconque des revendications 1 à 7, **caractérisée en ce que**
une pluralité de rangées des films de revêtement de matériau actif d'électrode sont formées sur le collecteur de manière à s'étendre dans le sens longitudinal de celui-ci avec un intervalle prédéterminé prévu entre elles.

9. Feuille de substrat d'électrode de batterie selon l'une quelconque des revendications 1 à 8, **caractérisée en ce que**
la feuille de substrat d'électrode de batterie (100) est utilisée pour une électrode de batterie lithium-ion.

10. Feuille de substrat d'électrode de batterie selon l'une quelconque des revendications 1 à 9, **caractérisée en ce que**
la feuille de substrat d'électrode de batterie (100) est utilisée pour une électrode positive.
